# EUROPEAN PATENT SPECIFICATION

(11) **EP 3 182 809 B1**
(45) Date of publication and mention of the grant of the patent: **01.01.2020**
(21) Application number: 16801119.5
(22) Date of filing: 19.04.2016
(51) Int. Cl.: H05B 37/02, H05B 33/08

(54) **FREQUENCY ADAPTIVE LED LAMP DRIVE CIRCUIT**
FREQUENZADAPTIVE ANSTEUERUNGSSCHALTUNG FÜR LED-LAMPEN
CIRCUIT DE COMMANDE DE LAMPE DEL ADAPTABLE EN FRÉQUENCE

(30) Priority: 20.10.2015 CN 201510684658
(43) Date of publication of application: 21.06.2017
(73) Proprietor: CH Lighting Technology Co., Ltd., Shaoxing, Zhejiang 312369 (CN)
(72) Inventor: ZHAO, Guosong, Shaoxing Zhejiang 312369 (CN)
(74) Representative: Gulde & Partner
(86) International application number: PCT/CN2016/079652
(87) International publication number: WO 2017/067144

(56) References cited:
- EP-A1- 2 922 369
- CN-A- 105 282 930
- CN-U- 202 652 610
- CN-U- 203 563 242
- CN-U- 205 082 011
- JP-A- 2012 009 286
- US-A1- 2014 306 615

## Description

### Field of the Invention

The present invention is related to the lighting field, in particular to a LED drive circuit.

### Background Art

Accompanied by increasing application of LED fluorescent lamp, two cases might be confronted during practical installation of the tube; firstly, new user may directly connect 90-305VAC municipal power supply to both terminals of LED fluorescent lamp; secondly, common fluorescent tube previously used by the user is connected behind the electronic ballast that can produce a high-frequency voltage above 80∼200V, 20KHZ during normal operation.

EP 2922369 A1 discloses a LED lamp driver circuit which is frequency adaptive.

CN 201210248617.6 discloses a LED fluorescent light source that is compatible with fluorescent lamp ballast, comprising a rectification module, a fluorescent ballast identification module as well as a power factor correction and constant-current control module; the said rectification module, fluorescent lamp ballast identification module as well as a power factor correction and constant-current control module are connected in proper sequence; the said rectification module is used to convert AC municipal power into DC power for output to the said fluorescent lamp ballast identification module; the said fluorescent lamp ballast identification module is used to identify the connected fluorescent lamp ballast, and output DC power to the said power factor correction and constant-current control module; the said power factor correction and constant-current control module is used for power factor correction and output of constant-current DC power.

CN 201410432721.X discloses a LED light source load detection circuit for the electronic ballast, comprising an electronic ballast, a secondary rectification filter module used to convert AC voltage output from the electronic ballast into DC voltage, a LED lighting module used to provide LED light source load, a LED current control module used to convert output current from LED lighting module into voltage for amplification, a LED current detection and indication module used to display results of LED light source load current detection; the said electronic ballast, secondary rectification filter module, LED lighting module, LED current control module and LED current detection and indication module are connected in proper sequence. Such detection circuit requires no reconstruction of household circuit, which can detect substituting LED light source load for energy-saving lamp to be substituted when original electronic ballast circuit subjects to no reconstruction; it can also detect output current for LED lamp lighting products and current as required by different types of electronic ballasts to be substituted by LED lamp lighting products.

CN 201020049883.2 discloses a LED tube applicable to various straight tube brackets, which falls into the field of bracket lamp and LED lamp lighting. To solve the problem with matching and interchangeability among various ballasts and municipal power sources inside the LED tube and straight tube brackets, a passive component network applicable to output properties of electronic ballast, a power frequency sampling identification circuit and driving circuit are provided to make sure that the current passing through the LED lamp panel is equal to the rated working current of fluorescent lamp; whereas pressure drop on both ends of the LED lamp panel is between 1/3 and 2/3 of rated working tube pressure of fluorescent lamp; owing to aforesaid methods, LED tube is applicable to various straight tube brackets.

Aforesaid technologies have improved applicability of LED to existing lines; if LED fluorescent lamp is not provided with relevant identification functions, customers may use the two types of power sources for manual switchover in correspondence to high-frequency input and low-frequency municipal power input; RC voltage reducing circuit is used to light the LED bead in case of input of high-frequency voltage; whereas AC/DC constant-current power source is used to light the LED bead in case of input of low-frequency municipal power. However, such approach may incur certain risks; mis-operation on the part of operator may result in damages to the lamp or even incur such personal injuries as electrical shock.

### Summary of the Invention

The present invention provides a LED lamp drive circuit of adaptive frequency that can make use of frequency detection to realize auto switchover of corresponding power source through detection of voltage frequency at input terminal.

The invention relates to a LED lamp drive circuit according to claim 1. A LED lamp drive circuit of adaptive frequency, comprising a first drive branch applicable to low frequency between the power source and LED and a second drive branch applicable to high frequency; the said first and second branches are provided with a change-over switch respectively; a frequency detection circuit for detection of power supply is also provided; the said frequency detection circuit is provided with a signal output terminal connected to the control terminal of change-over switch.

Low frequency and high frequency of the present invention are on the comparative ground; normally, municipal power can be deemed as of low frequency; whereas that subjecting to output from electronic ballast can be deemed as of high frequency. The present invention is favorable for auto selection of the 1^{st} drive branch applicable to low frequency or the 2^{nd} drive branch applicable to high frequency to dive LED lamp according to different frequencies. Prior art is applicable to both 1^{st} and 2^{nd} dive branches.

For instance the said 1^{st} drive branch belongs to AC/DC constant-current circuit; whereas the said 2^{nd} drive branch belongs to RC voltage reducing drive circuit.

In a preferred embodiment, the change-over switches on the first and second drive branches are relays independently or integrally set; wherein, NC and NO contacts are connected to the second drive branch and the first drive branch respectively.

The second drive branch is applicable to high frequency, which is connected to the NC contact of the relay for protection of LED at the initial power-on. It can further drive the change-over switch for corresponding action according to results of frequency detection.

The said frequency detection circuit comprises a rectification circuit connected to the power source, a voltage division sampling circuit connected to the output terminal of rectification circuit and a detection circuit used to receive signals from voltage division sampling circuit for frequency detection.

For instance, it is applicable to use high-pass or low-pass filter circuit for quantitative judgment of frequency and output of corresponding control signals to change-over switch; frequency detection is periodic, which can be provided with time-delay circuit; in order to prevent frequent or improper switchover due to the impact of noise signal, it is applicable to output corresponding control signals to change-over switch only on condition that conclusions of numerous continuous periodic judgments are identical.

Check if detection frequency of detection circuit is over 1KHz; it is to be marked as 0 if the detection frequency is over 1KHz; otherwise, it is to be marked as 1; however, the change-over switch is to be triggered if there are 4 consecutive rising edges. In a preferred embodiment, a blocking capacitor is provided between the said power source and rectification circuit.

In a preferred embodiment, output terminal of the said rectification circuit is connected to power supply terminal of the detection circuit, and a voltage stabilizing circuit is connected to the power supply terminal of the detection circuit.

The said voltage stabilizing circuit comprises a buffer capacitor and a Zener diode in parallel connection between the detection circuit and power supply terminal.

In a preferred embodiment, the change-over switches on the first and second drive branches are relays integrally set; control coil of the relay is in serial connection with a switch controlled by signal output terminal of frequency detection circuit.

In other words, it makes use of the same relay used for linked switchover of the 1^{st} and 2^{nd} drive circuits to simplify control circuit, and improve reliability.

In a preferred embodiment, control coil of the said relay is in parallel connection with the protection circuit.

The said protection circuit comprises a Zener diode and capacitor in parallel connection with control coil of the relay.

The LED lamp drive circuit of adaptive frequency according to present invention is available for auto switchover of corresponding power supply through detection of voltage frequency on the input terminal based on frequency detection. It is available for normal operation in any of frequency mode; for manufacturers, only one specification is adequate; furthermore, it requires no artificial identification in case of installation, which is safe and reliable.

### Description of Drawings

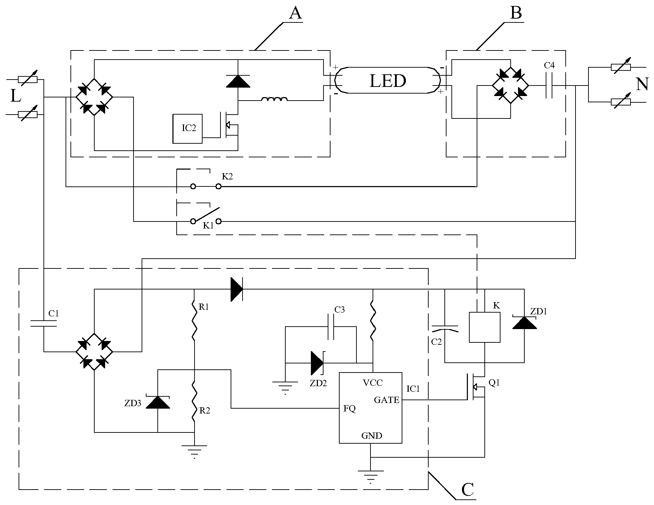

FIG 1 is the diagram for LED lamp drive circuit of the present invention.

### Preferred Embodiments

As shown in FIG 1, a LED lamp drive circuit of adaptive frequency according to embodiments of the present invention, comprising the 1^{st} drive branch A of low frequency among power source L, N and LED and the 2^{nd} drive circuit B of high frequency; output terminals of the 1^{st} drive branch A and the 2^{nd} drive branch B are connected to LED.

Frequency detection circuit C is used for detection of power frequency; the change-over switch is provided with a relay, of which NO contact K1 is connected with the 1^{st} drive branch A; whereas NC contact K2 is connected with the 2^{nd} drive branch B; control coil K of relay is in series connection with switching valve Q1, which is controlled by frequency detection circuit C; control coil K is also in parallel connection with Zener diode ZD1 and capacitor for protection.

The 1^{st} drive branch A belongs to AC/DC constant-current drive circuit (with build-in drive chip IC2); the 2^{nd} drive branch B belongs to RC voltage reducing and current limiting drive circuit (realized by capacitor C4); both branches are provided with rectification function.

Frequency detection circuit C comprises a blocking capacitor C1 connected to the power source and a rectification circuit; output terminal of the rectification circuit is provided with a voltage division sampling circuit R1 and R2 in series connection with the ground; sampling point between voltage division sampling circuit R1 and R2 are connected to the input terminal (pin FQ) of detection chip IC1; such detection chip IC1 is provided with a grounded pin GND and a pin GATE used for output.

Output terminal of rectification circuit is connected to the power supply terminal (pin VCC) via a diode and detection chip IC1; a stabilizing circuit is provided between power supply terminal of detection chip IC1 and the ground. The stabilizing circuit comprises a buffer capacitor C3 and a Zener diode ZD2 in parallel connection.

Work process of LED lamp drive circuit of adaptive frequency according to present invention is stated as follows:
NC contact K2 and the 2^{nd} drive branch B are to be switched on in case of power-on; meanwhile, rectification circuit in frequency detection circuit C is to be switched on to provide power supply to detection chip IC1.

Detection chip IC1 is used for frequency judgment following sampling at the sampling point; detection chip IC1 is provided with time-delay function, which can output corresponding control signals to change-over switch only on condition that conclusions of numerous continuous periodic judgments are identical.

Relay will maintain its status, and provide power supply to LED via drive branch B if high frequency mode is confirmed as a result of judgment.

If low frequency mode is confirmed as a result of judgment, switching valve Q1 is to be triggered to change the status of NO contact K1 and NC contact K2 via the control coil; under such circumstance, the 1^{st} drive branch A is to be switched on to provide power supply to LED.

## Claims

1. A LED lamp drive circuit which is frequency adaptive, comprising a first drive branch (A) for low frequency and a second drive branch (B) for high frequency, and a frequency detection circuit (C) for detection of the power supply frequency, wherein the branches are suitable for being connected between a power supply and a LED; each of the said first and second drive branches (A and B) comprises a switch;
**characterized in that** the LED lamp drive circuit further comprises a switching valve (Q1) and that the switches of the first and second drive branches (A and B) are implemented by a relay; the relay comprises a control coil (K) and a normally closed contact (K2) used as the switch for the second drive branch (B) and a normally opened contact (K1) used as the switch for the first drive branch (A), the relay is configured to maintain its status and provide power to the LED via the second drive branch (B) in case of high frequency, and the switching valve (Q1) is triggered to change the status of the normally opened contact (K1) and the normally closed contact (K2) via the control coil (K) to provide power to the LED via the first drive branch (A) in case of low frequency,
wherein the said control coil (K) of the relay is in serial connection with the switching valve (Q1) controlled by a signal output terminal of the frequency detection circuit (C), wherein the normally closed contact (K2) and the normally opened contact (K1) are connected to the second drive branch (B) and the first drive branch (A) respectively, wherein the normally closed contact (K2) is placed on the live wire (L) of the power supply at the input terminals of the second drive branch (B), and the normally opened contact (K1) is placed on the neutral wire (N) of the power supply at the input terminals of the first drive branch (A);
the said first drive branch (A) is an AC/DC drive circuit of constant current, and the second drive branch (B) is a voltage reducing and current limiting drive circuit realized by a capacitor (C4);
the said frequency detection circuit (C) comprises a rectification circuit connected to the power supply, a voltage division sampling circuit connected to the output terminals of the rectification circuit and a detection chip (IC1) used to receive signals from the voltage division sampling circuit for frequency detection.

2. The LED lamp drive circuit according to Claim 1, wherein a blocking capacitor is provided between the said power supply and rectification circuit.

3. The LED lamp drive circuit according to Claim 1, wherein an output terminal of the said rectification circuit is connected to a power supply terminal of the detection chip (IC1), and a voltage stabilizing circuit is connected to the power supply terminal of the detection chip (IC1).

4. The LED lamp drive circuit according to Claim 3, wherein the said voltage stabilizing circuit comprises a buffer capacitor (C3) and a Zener diode (ZD2) in parallel connection.

5. The LED lamp drive circuit according to Claim 1, wherein the control coil (K) of the relay is in parallel connection with a Zener diode (ZD1) and a capacitor (C2) for protection.

## Patentansprüche

1. Eine Ansteuerungsschaltung für LED-Lampen, die frequenzadaptiv ist, aufweisend einen ersten Ansteuerungszweig (A) für Niederfrequenz und einen zweiten Ansteuerungszweig (B) für Hochfrequenz und eine Frequenzerfassungsschaltung (C) zum Erfassen der Energieversorgungsfrequenz, wobei die Zweige geeignet sind, um zwischen eine Energieversorgung und eine LED geschaltet zu sein; wobei jeder des besagten ersten und zweiten Ansteuerungszweigs (A und B) einen Schalter aufweist;
**dadurch gekennzeichnet, dass** die Ansteuerungsschaltung für LED-Lampen ferner ein Schaltventil (Q1) aufweist und dass die Schalter des ersten und zweiten Ansteuerungszweigs (A und B) durch ein Relais implementiert sind; wobei das Relais eine Steuerspule (K) und einen normalerweise geschlossenen Kontakt (K2), der als Schalter für den zweiten Ansteuerungszweig (A) verwendet wird, und einen normalerweise geöffneten Kontakt (Kl), der als Schalter für den ersten Ansteuerungszweig (A) verwendet wird, aufweist, wobei das Relais konfiguriert ist, um seinen Zustand beizubehalten und im Falle von Hochfrequenz die LED über den zweiten Ansteuerungszweig (B) mit Energie zu versorgen, und wobei das Schaltventil (Q1) ausgelöst wird, um den Zustand des normalerweise geöffneten Kontakts (K1) und des normalerweise geschlossenen Kontakts (K2) über die Steuerspule (K) zu ändern, um im Falle von Niederfrequenz die LED über den ersten Ansteuerungszweig (A) mit Energie zu versorgen,
wobei die besagte Steuerspule (K) des Relais mit dem Schaltventil (Ql), das von einem Signalausgangsanschluss der Frequenzerfassungsschaltung (C) gesteuert wird, in Reihe geschaltet ist, wobei der normalerweise geschlossene Kontakt (K2) und der normalerweise geöffnete Kontakt (K1) jeweils mit dem zweiten Ansteuerungszweig (B) und dem ersten Ansteuerungszweig (A) verbunden sind, wobei der normalerweise geschlossene Kontakt (K2) auf dem stromführenden Leiter (L) der Energieversorgung an den Eingangsanschlüssen des zweiten Ansteuerungszweigs (B) positioniert ist und der normalerweise geöffnete Kontakt (K1) auf dem Neutralleiter (N) der Energieversorgung an den Eingangsanschlüssen des ersten Ansteuerungszweigs (A) positioniert ist;
wobei der besagte erste Ansteuerungszweig (A) eine AC/DC-Ansteuerschaltung konstanten Stroms ist und der zweite Ansteuerungszweig (B) eine Spannung reduzierende und Strom begrenzende Ansteuerungsschaltung, die durch einen Kondensator (C4) realisiert ist, ist;
wobei die besagte Frequenzerfassungsschaltung (C) eine Gleichrichtungsschaltung, die mit der Energieversorgung verbunden ist, eine Spannungsteiler-Abtastschaltung, die mit den Ausgangsanschlüssen der Gleichrichtungsschaltung verbunden ist, und einen Erfassungschip (IC1), der verwendet wird, um von der Spannungsteiler-Abtastschaltung Signale zur Frequenzerfassung zu empfangen, aufweist.

2. Die Ansteuerungsschaltung für LED-Lampen nach Anspruch 1, wobei ein Sperrkondensator zwischen der besagten Energieversorgung und der besagten Gleichrichtungsschaltung bereitgestellt wird.

3. Die Ansteuerungsschaltung für LED-Lampen nach Anspruch 1, wobei ein Ausgangsanschluss der besagten Gleichrichtungsschaltung mit einem Energieversorgungsanschluss des Erfassungschips (IC1) verbunden ist und eine Spannungsstabilisierungsschaltung mit dem Energieversorgungsanschluss des Erfassungschips (IC1) verbunden ist.

4. Die Ansteuerungsschaltung für LED-Lampen nach Anspruch 3, wobei die besagte Spannungsstabilisierungsschaltung einen Pufferkondensator (C3) und eine Zener-Diode (ZD2) in Parallelschaltung aufweist.

5. Die Ansteuerungsschaltung für LED-Lampen nach Anspruch 1, wobei die Steuerspule (K) des Relais zum Schutz mit einer Zener-Diode (ZD1) und einem Kondensator (C2) parallel geschaltet ist.

## Revendications

1. Un circuit de commande de lampe DEL qui est adaptable en fréquence, comprenant une première dérivation de commande (A) conçue pour une basse fréquence et une seconde dérivation de commande (B) conçue pour une haute fréquence et un circuit de détection de fréquence (C) conçu pour la détection de la fréquence d'alimentation en énergie, les dérivations étant appropriées pour être connectées entre une alimentation en énergie et une DEL ; chacune desdites première et seconde dérivations de commande (A et B) comprenant un commutateur ;
**caractérisé en ce que** le circuit de commande de lampe DEL comprend en outre une soupape de commutation (Ql), et **en ce que** les commutateurs des première et seconde dérivations de commande (A et B) sont implémentés par un relais ; le relais comprenant une bobine de commande (K) et un contact (K2) normalement fermé utilisé en tant que commutateur pour la seconde dérivation de commande (B) et un contact (K1) normalement ouvert utilisé en tant que commutateur pour la première dérivation de commande (A), le relais étant configuré pour maintenir son état et pour alimenter en énergie la DEL via la seconde dérivation de commande (B) en cas de haute fréquence ; et la soupape de commutation (Q1) étant déclenchée pour changer l'état du contact (K1) normalement ouvert et du contact (K2) normalement fermé via la bobine de commande (K) pour alimenter en énergie la DEL via la première dérivation de commande (A) en cas de basse fréquence,
ladite bobine de commande (K) du relais étant connectée en série avec la soupape de commutation (Q1) commandée par une borne de sortie de signal du circuit de détection de fréquence (C), le contact (K2) normalement fermé et le contact (K1) normalement ouvert étant connectés à la seconde dérivation de commande (B) et la première dérivation de commande (A), respectivement, le contact (K2) normalement fermé étant placé sur le fil sous tension (L) de l'alimentation en énergie au niveau des bornes d'entrée de la seconde dérivation de commande (B), et le contact (K1) normalement ouvert étant placé sur le fil neutre (N) de l'alimentation en énergie au niveau des bornes d'entrée de la première dérivation de commande (A) ;
ladite première dérivation de commande (A) étant un circuit de commande CA/CC de courant constant et la seconde dérivation de commande (B) étant un circuit de commande de réduction de tension et de limitation de courant réalisé par un condensateur (C4) ;
ledit circuit de détection de fréquence (C) comprenant un circuit de redressement connecté à l'alimentation en énergie, un circuit d'échantillonnage de division de tension connecté aux bornes de sortie du circuit de redressement, et une puce de détection (IC1) utilisée pour recevoir des signaux du circuit d'échantillonnage de division de tension pour la détection de fréquence.

2. Le circuit de commande de lampe DEL selon la revendication 1, dans lequel un condensateur de blocage est prévu entre ladite alimentation en énergie et ledit circuit de redressement.

3. Le circuit de commande de lampe DEL selon la revendication 1, dans lequel une borne de sortie dudit circuit de redressement est connectée à une borne d'alimentation en énergie de la puce de détection (IC1), et un circuit de stabilisation de tension est connecté à la borne d'alimentation en énergie de la puce de détection (IC1).

4. Le circuit de commande de lampe DEL selon la revendication 3, dans lequel ledit circuit de stabilisation de tension comprend un condensateur tampon (C3) et une diode Zener (ZD2) en connexion parallèle.

5. Le circuit de commande de lampe DEL selon la revendication 1, dans lequel la bobine de commande (K) du relais est connectée en parallèle avec une diode Zener (ZD1) et un condensateur (C2) pour la protection.
